# EUROPÄISCHE PATENTSCHRIFT

(11) **EP 3 647 036 B1**
(45) Veröffentlichungstag und Bekanntmachung des Hinweises auf die Patenterteilung: **07.06.2023**
(21) Anmeldenummer: 18203382.9
(22) Anmeldetag: 30.10.2018
(51) Int. Cl.: B29C 70/50, B29B 11/16, B29C 65/00, B29C 65/08, B29C 70/54, B29C 65/18, B29C 65/82

(54) **UNIDIREKTIONAL FASERVERSTÄRKTE ENDLOSWICKELLAGE**
UNIDIRECTIONALLY FIBRE REINFORCED ENDLESS WINDING LAYER
COUCHE D'ENROULEMENT SANS FIN RENFORCÉE PAR DES FIBRES UNIDIRECTIONNELLES

(43) Veröffentlichungstag der Anmeldung: 06.05.2020
(73) Patentinhaber: Profol Kunststoffe GmbH, 83128 Halfing (DE)
(72) Erfinder: Bayer, Helmut, 83361 Kienberg (DE); Maier, Konrad, 83512 Wasserburg (DE)
(74) Vertreter: SSM Sandmair

(56) Entgegenhaltungen:
- EP-A2- 2 301 735
- JP-A- H07 227 841
- US-A1- 2013 217 558
- US-B1- 6 585 842

## Beschreibung

Die Erfindung betrifft eine mit unidirektionalen Endlosfasern verstärkte Halbzeugbahn, insbesondere als Endloswickellage, wobei die Endlosfasern eine definierte und von der Laufrichtung abweichende Ausrichtung aufweisen (sogenanntes X°-Tape). Weiterhin betrifft die Erfindung ein Verfahren zur Herstellung der erfindungsgemäßen X°-Tapes und Endloswickellagen sowie deren Verwendung zur Herstellung eines Mehrschichtverbundwerkstoffs, beispielsweise eines Organoblechs und einen Mehrschichtverbundwerkstoff, umfassend mindestens eine Schicht aus der erfindungsgemäßen Halbzeugbahn.

Als Ersatz für Metallbleche werden insbesondere im Automobil- und Luftfahrzeugbau bereits seit einiger Zeit Organobleche eingesetzt, die eine hohe mechanische Stabilität mit geringem Gewicht verbinden können. Organobleche werden beispielsweise unter dem Namen Tepex^{®} von Bond-Laminates GmbH, Brilon, Deutschland und als Ultracom^{®} von der BASF SE, Ludwigshafen, Deutschland angeboten. Organobleche sind Faser-Matrix-Halbzeuge, die in der Regel aus einem in eine thermoplastische Matrix eingebetteten Fasergewebe oder Fasergelege bestehen. Da das Zug- und Druckverhalten und andere mechanische und thermische Eigenschaften von Organoblechen im Gegensatz zu Metallblechen nicht isotrop ist und von der Ausrichtung der Fasern abhängt, werden teilweise ungeregelt verteilte Kurzfasern oder Fasergewebe in eine thermoplastische Matrix eingebettet. Besondere mechanische Stabilität tragen jedoch Endlosfasern bei.

Für die Herstellung von Halbzeugbahnen als Bestandteile von Organoblechen sind Verfahren vorgeschlagen worden, bei denen auf eine Grundbahn Fasern und Matrixmaterial abgelegt werden, die dann in einem nachfolgenden Schritt verbunden werden (bspw. EP 3 077 308 A1).

Alternativ sind Bauteile aus Organoblechen bekannt, die durch Abschneiden von Segmenten sogenannter 0°-Tapes, d.h. von Segmenten von bandförmigen Bahnen, die eine Faserverstärkung mit parallel in Laufrichtung angeordneter paralleler in einer thermoplastischen Kunststoffmatrix eingebetteter Endlosfasern aufweisen, und Ablegen dieser Segmente übereinander in mehreren Lagen in eine bestimmte Form eines Presswerkzeugs bzw. Laminier-Werkzeugs mit anschließender Laminierung unter Druck und Hitze hergestellt werden. Ein Organoblech ist somit ein Mehrschichtverbundwerkstoff, dessen Schichten den faserverstärkten und gegebenenfalls auch zusätzlich nicht faserverstärkten Halbzeugbahnen/Bändern entsprechen.

Dadurch, daß hier die verschiedenen Lagen der Segmente eine unterschiedliche Ausrichtung der Faserverstärkung aufweisen können, lassen sich, obwohl verhältnismäßig aufwendig in der Produktion, Organobleche mit vorbestimmten Zugkräften und thermischen sowie mechanischen Eigenschaften in vorbestimmten gewünschten Richtungen des Bauteils erzielen. "Laufrichtung" im Verständnis der vorliegenden Offenbarung ist gleichbedeutend mit der Bahn-hauptrichtung (oder Hauptbahnrichtung) eines Bandes. Ein 0°-Tape (0°-UD-Tape, 0-Tape, 0°-UD-Band, 0°-Band, 0-Band) weist somit Fasern auf, die im wesentlichen parallel zur Laufrichtung des Bandes verlaufen.

Besonders vielseitig, variabel und besonders ökonomisch lassen sich Organobleche dagegen durch Laminieren mehrerer vorfabrizierter Halbzeugbahnen/Bänder herstellen, wobei die zu laminierenden Halbzeugbahnen/Bänder je eine thermoplastische Matrix aus vorzugsweise demselben oder kompatiblen thermoplastischen Kunststoffen und innerhalb einer Halbzeugbahn/eines Bandes im wesentlichen parallel ausgerichtete Verstärkungsfasern enthalten. Um die innerhalb einer Halbzeugbahn/eines Bandes, d.h. einer Lage anisotropen Eigenschaften in mehreren Richtungen der Ebene verfügbar zu machen, können Lagen aus Bändern mit unterschiedlichen Ausrichtungen der Fasern laminiert werden. Ein solches Organoblech besteht dann beispielsweise aus bis zu zehn Lagen oder mehr, die aus Halbzeugbahnen/Bändern mit mindestens zwei unterschiedlichen Faserausrichtungen geschnitten wurden.

Die (mechanischen) Eigenschaften einer Lage und auch eines Verbundes verschiedener Lagen lassen sich mit guter Genauigkeit berechnen und vorhersagen, wenn die Faserdichte innerhalb einer Halbzeugbahn/eines Bandes keinen großen Schwankungen unterliegt. Zugbelastung, Steifigkeit, Festigkeit und Wärmeausdehnung hängen insbesondere von der Faserdichte ab. Daher sollten die Halbzeugbahnen/Bänder für eine bessere Qualitätstoleranz und zur besseren Vorhersagbarkeit und Berechenbarkeit dieser Parameter keine regellos oder periodisch wiederkehrenden "Fehlstellen" deutlich geringerer Faserdichte aufweisen.

Das einfachste Beispiel einlagiger mit unidirektionalen Endlosfasern verstärkter Halbzeugbahnen sind die obengenannten 0°-UD-Tapes (UD = unidirectional), in denen die parallel angeordneten Endlosfasern, eingebettet in eine thermoplastische Matrix im wesentlichen genau parallel zur Laufrichtung ausgerichtet sind. Solche 0°-UD-Tapes und deren Herstellung werden unter anderem in WO 2012/123302 A1 beschrieben. Neben 0°-Tapes sind auch sogenannte X°-UD-Tapes (oder X°-Tapes, bzw. X-Tapes, X°-Bänder, X°-UD-Bänder, X-Bänder) bekannt, d.h. Bänder, die ebenfalls parallel zueinander angeordnete Endlosfasern, eingebettet in eine thermoplastische Matrix beinhalten, wobei jedoch die Faserrichtung einen von 0° unterschiedlichen Winkel zur Laufrichtung bildet. Üblicherweise wird der Winkel als Winkelbetrag angegeben, d.h. in einem Bereich von größer als 0° bis 90°. Ein 90°-UD-Tape (90°-Tape, 90-Tape, usw.) beinhaltet also genau quer zur Laufrichtung verlaufende zueinander parallele Fasern.

Es ist bekannt, dass X°-Tapes unter Verwendung von 0°-UD-Tapes hergestellt werden können. So beschreiben beispielsweise EP 2 377 673 A2, EP 0 740 996 A1, US 5,766,725 oder auch DE 10 2012 111 761 A1 jeweils Verfahren, in denen Abschnitte eines 0°-UD-Tapes so auf einer Bahngrundlage, d.h. auf einer bereits bestehenden thermoplastischen Bahn nebeneinander abgelegt und laminiert werden, daß die Fasern der Abschnitte weiterhin parallel, jedoch in einem Winkel größer als 0° bis hin zu 90° zur Laufrichtung der Bahngrundlage ausgerichtet sind. In den auf diese Weise hergestellten mindestens zweilagigen, niemals einlagigen Bändern wird für die mechanische Festigkeit des Bandes und zur Verbindung der 0°-UD-Tape-Abschnitte untereinander eine stabilisierende Bahngrundlage benötigt. Eine derartig hergestellte Bahn weist eine größere Dicke, geringere Flexibilität, schlechte Aufwickelbarkeit und eine geringere und vor allem nicht über die gesamte Dicke gleichmäßige Faserdichte auf.

Auch die Herstellung einlagiger X°-Tapes unter Verwendung von Abschnitten aus 0°-UD-Tapes, d.h. ohne die Verwendung einer Bahngrundlage, mit der die Abschnitte verbunden werden, um eine X°-Tape-Lage zu bilden, wurde bereits beschrieben. EP 3 243 641 A1 beschreibt ein Verfahren, in dem Abschnitte eines 0°-UD-Tapes auf einem in der neuen Bandrichtung bewegbaren "Tisch" bündig ("abutted"), d.h. auf Stoß aneinander abgelegt werden, gefolgt von Verschweißen, wodurch das X°-Tape gebildet wird. Ausdrücklich wird in EP 3 243 641 A1 betont, daß das Ablegen auf Stoß erfolgt, um eine Deformation des entstehenden X°-Tapes zu vermeiden.

Allen diesen bekannten Verfahren ist gemein, daß die Abschnitte auf Stoß positioniert werden, bevor sie dann durch Schweißverfahren verbunden werden. Hierbei fließt am Stoß das beim Schweißvorgang verflüssigte thermoplastische Matrixmaterial in zwischen den Stößen auftretende Zwischenräume. Unregelmäßigkeiten an den Stoßkanten, die auf unterschiedliche Schneidmesser bzw. deren Schneidkanten oder andere Einflüsse zurückgehen können, führen zwangsläufig zu unerwünschten Fehlstellen bzw. unerwünschter Einschnürung oder Verdünnung der Bahn im Bereich der Schweißnaht. Ebenso kann bei einer Ablage der Abschnitte auf Stoß niemals eine ideale lückenlose Aneinanderfügung vor der Verschweißung erzielt werden. Bei der Verteilung des thermoplastischen Matrixmaterials während der Verschweißung wird so zwangsläufig eine Zone im Bereich der Schweißnaht erzeugt, in der die Dichte, bzw. der Gehalt an Verstärkungsfasern und somit auch der Fasergewichtsanteil geringer ist als in den übrigen Bereichen der Bahn, bzw. geringer als im arithmetischen Durchschnitt der übrigen Bahn außerhalb der Schweißnähte. Dies führt zu zwei Nachteilen: Einerseits wird die mechanische Stabilität in Laufrichtung des hergestellten X°-Tapes beeinträchtigt, da nicht ausreichend Thermoplast verfügbar ist, um jede Lücke zu schließen und dabei die Dicke der Bahn einheitlich zu erhalten. Andererseits entstehen zwangsläufig und in periodisch wiederkehrenden Abständen (nämlich an den Schweißnähten) Bereiche, in denen der Gehalt an Verstärkungsfasern, meßbar als Fasergewicht pro Längeneinheit in Laufrichtung, geringer ist als im arithmetischen Durchschnitt der übrigen Bahn außerhalb der Schweißnähte - bis hin zu Abschnitten, die praktisch gar keine Fasern mehr aufweisen. Dies ist nachteilig unter anderem vor dem Hintergrund, daß die hergestellten X°-Tapes Verwendung finden sollen als Lagen in Organoblechen. Hier wird großer Wert gelegt auf die Berechenbarkeit und Vorhersagbarkeit der anisotropen mechanischen und thermischen Eigenschaften. Vorhersagbarkeit und Berechenbarkeit setzen jedoch eine weitgehende Konstanz oder zumindest eine möglichst durchgehende Mindestdichte bzw. einen möglichst durchgehenden Mindestgehalt an Verstärkungsfasern voraus. Wiederkehrende Zonen geringeren Fasergehalts bzw. Fasergewichts/geringerer Faserdichte führen zu unerwünschten und nicht berechenbaren Fehlstellen im Organoblech.

JP H07 227841 A beschreibt faserverstärkte thermoplastische Halbzeugbahnen, in denen die Verstärkungsfasern in einem Winkel zwischen 5° und 175° zur longitudinalen Ausrichtung angeordnet sind und wobei die Ausrichtung durch Schneiden von Segmenten einer 0°-Bahn und anschließendes Aneinanderlegen und Verschweißen der Segmente erzielt wird. Die Segmente sollen dabei bevorzugt wie in den Beispielen auf Stoß abgelegt werden. Eine Überlappung insbesondere der Faserlagen wird nicht beschrieben.

Die Erfindung stellt sich die Lösung einer oder mehrerer der oben angegebenen Schwierigkeiten des Standes der Technik zur Aufgabe. Es ist daher ein ausdrückliches Ziel der vorliegenden Erfindung, derartige Fehlstellen zu vermeiden. Gleichzeitig stellt sich die Erfindung die Aufgabe, einlagige X°-UD-Tapes bereitzustellen, die eine ausreichende mechanische Stabilität und Festigkeit in Laufrichtung in den Schweißbereichen aufweisen. Ferner ist eine Aufgabe der vorliegenden Erfindung, ein Verfahren zur Herstellung der erfindungsgemäßen X°-Tapes bereitzustellen, das sich durch besondere Geschwindigkeit, Qualität und Effizienz auszeichnet.

Mindestens eine, vorzugsweise mehrere der genannten Aufgaben und Nachteile des Standes der Technik werden gelöst durch eine mit unidirektional ausgerichteten Endlosfasern verstärkte einlagige Halbzeugbahn mit einer Laufrichtung, die eine Matrix enthaltend mindestens 60 Gew.-% aus einem oder mehreren thermoplastischen Polymeren ausgewählt aus der Gruppe bestehend aus Polyamid, Polyolefin und Gemischen davon aufweist und in periodisch auftretenden Abständen Schweißnähte überlappender faserverstärkter Halbzeugbahnsegmente aufweist, wobei die Faserlagen der faserverstärkten Halbzeugbahnsegmente überlappen, wobei die Dicke der Halbzeugbahn im Bereich der Schweißnähte mindestens genauso hoch ist wie im arithmetischen Mittel der übrigen Bereiche der Halbzeugbahn und wobei in Laufrichtung die Breite der Bereiche der Schweißnähte 0,1 bis 8 mm beträgt und wobei die Dicke der Halbzeugbahn in den Bereichen außerhalb der Bereiche der Schweißnähte 0,01 mm bis 0,40 mm beträgt und wobei die unidirektional ausgerichteten Endlosfasern einen vorbestimmten Winkel mit der Laufrichtung einschließen, dessen Betrag α im Bereich von größer 0° bis 90° liegt.

Im Sinne der Erfindung besonders bevorzugt ist es, wenn die Schweißnähte, d.h. die in periodisch auftretenden Abständen auftretende Schweißnaht, durch Ultraschallschweißen erzeugt wurden.

Bevorzugt enthält die Matrix mindestens 70 Gew.-% und vorteilhaft beispielsweise höchstens 98 Gew.-% oder 75 bis 95 Gew.-% bzw. 80-90 Gew.-% thermoplastischen Polymer(en), ganz besonders bevorzugt besteht die Matrix aus einem oder einem Gemisch zweier oder mehrerer thermoplastischer Polymere ausgewählt aus thermoplastischem Polyamid, Polypropylen, und Polyethylen. Dem oder den thermoplastischen Polymer(en) können bis zu 30 Gew.-%, vorzugsweise bis zu 25, 20, 10 oder 5 Gew.-%, bezogen auf die Matrix (Polymer(e) plus Additive) eines oder mehrere übliche Additive beigemischt sein, bevorzugt ausgewählt aus Flammschutzmitteln, Antitropfmitteln, Thermostabilisatoren, Entformungsmitteln, Antioxidantien, UV-Absorbern, IR-Absorbern, Gammastrahlenstabilisatoren, Antistatika, optischen Aufhellern, Lichtstreumitteln, Gleitmitteln, Thermo- und/oder Hydrolyse-Stabilisatoren, Fließverbesserer, Elastomermodifikatoren, Emulgatoren, Nukleierungsmittel, Farbmitteln wie Pigmenten, anorganischen Füllstoffen sowie Gemischen daraus.

Unter Verstärkungsfasern unterscheidet man Kurzfasern mit einer Faserlänge von 0,1 bis 1 mm, Langfasern mit einer Faserlänge von 1 mm bis 50 mm und Endlosfasern mit einer Faserlänge von größer als 50 mm. Erfindungsgemäß können die Endlosfasern auch im arithmetischen Mittel eine Länge von 50 mm bis 10000 mm oder 200 bis 1000 mm haben. Ebenfalls Endlosfasern im Sinne der Erfindung sind Fasern, deren Länge im wesentlichen der Abmessung der Halbzeugbahn in Laufrichtung entspricht, die sie verstärken sollen. Der Fachmann versteht dabei, dass die Länge von Endlosfasern bei X°-Tapes durch die Seitenkanten des X°-Tapes begrenzt sind. Erfindungsgemäß ist der Anteil an Endlosfasern an den Verstärkungsfasern im allgemeinen größer als 90%, bevorzugt größer als 95%, ganz besonders bevorzugt größer als 98%. Mit Endlosfasern werden die höchsten Steifigkeits- und Festigkeitswerte erzielt.

Eine Halbzeugbahn gemäß der vorliegenden Erfindung wird auch als Lage bezeichnet. Eine Endloslage bezeichnet dabei eine Lage (eine Halbzeugbahn, ein 0°-Tape bzw ein X°-Tape), die prinzipiell und praktisch endlos sein kann oder eine Länge von bis zu 3000 m, bevorzugt bis zu 2500 m, beispielsweise bis zu 2000 m aufweist und dabei beispielsweise mindestens länger als 100 m, bevorzugt länger als 1000 m ist, beispielsweise 1800 bis 1900 m.

Eine Halbzeugbahn gemäß der vorliegenden Erfindung weist eine Laufrichtung in Richtung ihrer längsten Ausdehnung auf. Üblicherweise kann eine erfindungsgemäße Halbzeugbahn auf eine Rolle bzw. Walze aufgewickelt werden, wobei prinzipiell verschiedene Wickelverfahren und Wickelwinkel zur Verfügung stehen. Man spricht dann von einer Wickellage, bei einer Wickellage aus Endloslage (Endlos-Halbzeugbahn) spricht man dementsprechend von einer Endlos-Wickellage. Der Begriff "Bahn" bzw. "Halbzeugbahn" umfaßt im Sinne der vorliegenden Offenbarung auch eine Bahn "im Entstehen", die ggf nur aus wenigen Segmenten besteht.

Die Schweißnaht ist der Bereich, in dem beim Verschweißen eine Erweichung bis hin zur Verflüssigung des thermoplastischen Materials (des Polymeren) eintritt. Von herkömmlichen X°-Tapes unterscheiden sich die erfindungsgemäßen Halbzeugbahnen wesentlich unter anderem dadurch, dass sich im Bereich der Schweißnaht, bzw. Schweißnähte faserverstärkte Halbzeugbahnsegmente überlappen, wobei die Faserlagen der faserverstärkten Halbzeugbahnsegmente überlappen. Der Fachmann erkennt in der mikrosopischen Aufnahme des Querschnitts der Halbzeugbahn im Bereich der Schweißnaht, ob sich die Faserlagen der faserverstärkten Halbzeugbahnsegmente überlappen.

Die erfindungsgemäße Überlappung im Bereich der Schweißnaht, bzw. Schweißnähte sorgt dafür, dass sowohl die Dicke im Bereich der Schweißnaht, als auch der Fasergewichtsanteil im arithmetischen Mittel im Bereich der Schweißnaht nicht unter die arithmetischen Mittelwerte der übrigen Bereiche außerhalb der Schweißnähte fallen. Bevorzugt liegt wenigstens ein Parameter, d.h. Dicke oder Fasergewichtsanteil im Bereich der Schweißnaht im arithmetischen Mittel über den entsprechenden Werten im arithmetischen Mittel der übrigen Bereiche außerhalb der Schweißnaht, woran der Fachmann ebenfalls die Überlappung im Bereich der Schweißnaht erkennt. Ganz besonders bevorzugt liegen beide Parameter im Bereich der Schweißnaht über den entsprechenden Werten außerhalb der Schweißnaht. Dabei kann der Fasergewichtsanteil beispielsweise dadurch bestimmt werden, dass der zu untersuchende Bereich (beispielsweise die Schweißnaht) aus der Halbzeugbahn ausgeschnitten wird, ihr Gewicht bestimmt wird, verascht wird und erneut das Gewicht bestimmt wird. Die Differenz aus Anfangsgewicht und Endgewicht ist dann das Fasergewicht. Der Quotient aus Fasergewicht zu Anfangsgewicht ist der Fasergewichtsanteil. Diese Messung kann beispielsweise über mindestens 15 (möglichst aufeinanderfolgende) Schweißnähte, idealerweise über die gesamte Halbzeugbahn, wiederholt werden und das arithmetische Mittel gebildet werden, um im Sinne der Erfindung das arithmetische Mittel zu bestimmen.

Unter dem Fasergewichtsanteil wird dabei der relative Anteil der Fasern am Gesamtgewicht des Matrix (Polymere plus gegebenenfalls Additive) und Verstärkungsfasern enthaltenden Halbzeugs verstanden.

Die erfindungsgemäße Überlappung im Bereich der Schweißnaht, bzw. der Schweißnähte sorgt auch dafür, dass das Fasergewicht pro Längeneinheit in Laufrichtung im Bereich der Schweißnähte höher ist als außerhalb der Schweißnähte. Dies erkennt der Fachmann in der mikroskopischen Aufnahme des Querschnitts der Halbzeugbahn an einer größeren Menge an Fasern, beispielsweise etwa einer Verdopplung an Fasern pro Längeneinheit in Laufrichtung im Bereich der Schweißnähte als in den unmittelbar angrenzenden Bereichen außerhalb der Schweißnähte.

Die Schweißnaht hat in Längsrichtung (Laufrichtung) der Halbzeug-Bahn bevorzugt eine Breite von 0,1 bis 6 mm, vorteilhaft 0,2 bis 4 mm, besonders bevorzugt 1,0 mm bis 3 mm, ganz besonders bevorzugt 1,5 bis 2,5 mm.

Erfindungsgemäß ist die Dicke im Bereich der Schweißnähte der Halbzeugbahn mindestens genauso hoch wie im arithmetischen Mittel der übrigen Bereiche der Halbzeugbahn, bevorzugt mindestens 1,2 mal so hoch. Durch die Verschweißung wird die Dicke in der Regel im Bereich der Schweißnähte im arithmetischen Mittel über die gesamte Schweißnaht das 1,1-fache bis zum 2,0-fachen des arithmetischen Mittels der übrigen Bereiche der Halbzeugbahn betragen, bevorzugt das 1,1-fache bis 1,8-fache, oder das 1,1-fache bis 1,6-fache und ganz besonders das 1,1-fache bis 1,2-fache, möglich sind auch das 1,2-fache bis 1,7-fache und das 1,3-fache bis 1,5-fache. Da die Schweißnaht nicht notwendig eben ist und beispielsweise ein gezacktes Rippenmuster aufweisen kann, kann die Dicke der Halbzeugbahn im Bereich der Schweißnähte bevorzugt zwischen dem 1,2-fachen und 4,0-fachen oder stärker bevorzugt zwischen dem 1,5-fachen und dem 3,0-fachen des arithmetischen Mittels der übrigen Bereiche der Halbzeugbahn variieren. Die Dicke der Halbzeugbahn beträgt in den Bereichen außerhalb der Bereiche der Schweißnähte bevorzugt 0,10 bis 0,30 mm, besonders 0,15 bis 0,25 mm, ganz besonders 0,18 bis 0,23 mm, 0,19 bis 0,22 mm oder speziell 0,20 bis 0,22 mm, beispielsweise etwa 0,21 mm.

Bevorzugt ist der Fasergewichtsanteil im Bereich der Schweißnaht im arithmetischen Mittel höher als im arithmetischen Mittel der übrigen Bereiche der Halbzeugbahn. Bevorzugt kann auch das Fasergewicht pro Längeneinheit in Laufrichtung, arithmetisch gemittelt über alle Schweißnähte einer Halbzeugbahn, höher sein als und höchstens doppelt so hoch wie im arithmetischen Mittel der übrigen Bereiche der Halbzeugbahn. Bevorzugt ist daher auch die Faserdichte, d.h. die Anzahl an Fasern pro Längeneinheit in Laufrichtung, mindestens genauso hoch wie in den übrigen Bereichen der Halbzeugbahn, gemessen am arithmetischen Mittel. Bevorzugt beträgt das Fasergewicht pro Längeneinheit in Laufrichtung, arithmetisch gemittelt über alle Schweißnähte einer Halbzeugbahn, im Bereich der Schweißnaht 1,4 bis 2,0, bevorzugt 1,8 bis 2,0 mal so hoch ist wie im arithmetischen Mittel der übrigen Bereiche der Halbzeugbahn.

Die erfindungsgemäße Halbzeugbahn in den Bereichen außerhalb der Schweißnähte weist im allgemeinen einen mittleren Fasergewichtsanteil wie die Ausgangshalbzeugbahn auf. Arithmetisch gemittelt ist der Fasergewichtsanteil hier bevorzugt 50-90 Gew.-%, besonders 60-80 Gew.-%, oder ganz besonders im Bereich von 65 bis 75 Gew.-%, ganz besonders etwa 72 Gew.- %.

Die hier verwendete Definition der Halbzeugbahn soll auch eine Bahn "im Entstehen" umfassen, die ggf nur aus wenigen Segmenten besteht. Besonders bevorzugt umfaßt eine Bahn jedoch eine Lage mit einer Mindestlänge von 20 m, noch stärker bevorzugt mindestens 500m.

Die Breite der Bahn ist für die Erfindung nicht wesentlich und kann den konkreten praktischen Anforderungen für die Verwendung der Halbzeugbahn angepaßt werden. Die Breite kann beispielsweise im Bereich von 30 bis 250 cm liegen, im Bereich von 30 bis 150 cm oder 60 bis 130 cm oder auch im Bereich von 115 bis 128 cm oder speziell bei etwa 124 cm oder präzisen 124,0 cm.

Prinzipiell können die unidirektional ausgerichteten Endlosfasern jeden vorbestimmten Winkel mit der Bahn-Hauptrichtung einschließen, dessen Betrag α im Bereich von größer 0° bis 90° liegt. Bevorzugt sind jedoch Winkel, die deutlich von 0° verschieden sind, beispielsweise Winkel von mindestens 10° oder mindestens 20°. Spezielle X-Tapes gemäß der vorliegenden Erfindung sind dabei 30°-Tapes, 45°-Tapes, 60°-Tapes und 90°-Tapes. Wie bereits beschrieben wird hierbei unter einem beispielsweise 45°-Tape eine Halbzeugbahn verstanden, in der die Fasern um 45° in eine der beiden möglichen Richtungen von der Laufrichtung abweichen.

Als Fasern können erfindungsgemäß alle Arten von Verstärkungsfasern Verwendung finden wie Glasfasern, Polymerfasern wie z.B. Aramidfasern, Polyesterfasern, Polyamidfasern wie Nylonfasern, Polyethylenfasern, Plexiglasfasern, Kohlenstoffasern (Carbonfasern), mineralische Fasern oder anorganische Synthesefasern, Mineralfasern, Basaltfasern, Borfasern, Kieselsäurefasern, Keramikfasern, Stahlfasern, Holzfasern, Flachsfasern, Hanffasern, Jutefasern, Kenaffasern, Ramiefasern, Sisalfasern und Kombinationen davon. Besonders bevorzugt werden Glasfasern und Carbonfasern.

Glasfaserverstärkte erfindungsgemäße Halbzeugbahnen zeichnen sich unter anderem durch ein geringes Gewicht und eine ökonomische Herstellung aus. Die Fasern haben bevorzugt einen Durchmesser im Bereich vom 6 bis 19 µm. Sie können jedoch auch einen niedrigeren oder höheren Durchmesser haben.

Die thermoplastischen Polymere der Kunststoffmatrix besitzen bevorzugt einen niedrigereren Schmelzpunkt als die Verstärkungsfasern. Dabei umfaßt die Matrix, einen oder mehrere der thermoplastischen Polymere Polyolefin und/oder Polyamid (PA) und/oder Kombinationen davon. Besonders bevorzugt sind Polypropylen und/oder Polyamid. Besonders bevorzugt enthält die Matrix keine weiteren thermoplastischen Kunststoffe. Polymere wie Polycarbonat oder Polyimid werden vorzugsweise nicht verwendet.

Geeignete Polyamide sind beispielsweise: Homopolyamide, Copolyamide sowie Mischungen davon. Bevorzugt werden teilkristalline und/oder amorphe Polyamide eingesetzt wie zB. Polyamid-6, Polyamid-6,6, Polyamide, deren Säurekomponente Terephthalsäure, Isophthalsäure, Korksäure, Sebacinsäure, Azelainsäure, Adipinsäure und/oder Cyclohexandicarbonsäure enthält und/oder deren Diaminkomponente m- und/oder p-Xylylendiamin, Hexamethylendiamin, 2,2,4-Trimethylhexanmethylendiamin, 2,4,4-Trimethylhexamethylendiamin und/oder Isophorondiamin enthält.

Geeignete Polyolefine sind beispielsweise Polyethylen (PE), Polypropylen (PP) oder Ethylen-Propylen-Copolymere.

In der erfindungsgemäßen Halbzeugbahn können die Abstände von Schweißnaht zu Schweißnaht in Bahn-Hauptrichtung, gemessen von Beginn der Schweißnaht bis zum Beginn der darauffolgenden Schweißnaht bevorzugt 30 bis 150 cm, insbesondere 60 bis 130 cm, bevorzugt 115,0 bis 128,0 cm betragen.

Eine besonders ausgestaltete Ausführungsform der Erfindung betrifft eine Endloswickellage bestehend aus einer oder mehreren aufgewickelten Halbzeugbahnen gemäß der vorliegenden Erfindung.

Mit den aus dem Stand der Technik bekannten Verfahren sind erfindungsgemäße Halbzeugbahnen oder X°-Tapes nicht darstellbar. Sofern sie überhaupt einlagig sind, zeigen konventionelle X°-Tapes, bedingt durch ihr Herstellungsverfahren, im Bereich der Schweißnähte keine Überlappung von Faserlagen. Sie zeigen ein geringeres Fasergewicht pro Längeneinheit in Laufrichtung, als in den unmittelbar angrenzenden Bereichen außerhalb der Schweißnähte. Sie zeigen kein erhöhtes Fasergewicht pro Längeneinheit in Laufrichtung, arithmetisch gemittelt über alle Schweißnähte einer Halbzeugbahn gegenüber dem arithmetischen Mittel der übrigen Bereiche der Halbzeugbahn. Sie zeigen im arithmetischen Mittel einen geringeren Fasergewichtsanteil und/oder eine geringere Dicke im Bereich der Schweißnähte gegenüber den Bereichen außerhalb der Schweißnähte.

Das erfindungsgemäße Verfahren zur Herstellung einer Halbzeugbahn umfaßt die Schritte:
a) Zuführen einer mit unidirektional in Ausgangshalbzeugbahn-Hauptrichtung ausgerichteten Endlosfasern verstärkten einlagigen Ausgangshalbzeugbahn, in der die unidirektional ausgerichteten Endlosfasem in einer Matrix enthaltend mindestens 60 Gew.-% aus einem oder mehreren thermoplastischen Polymeren ausgewählt aus der Gruppe bestehend aus Polyamid, Polyolefin und Gemischen davon eingebettet sind und die zwei gegenüberliegende, parallele durch die Breite der Ausgangshalbzeugbahn beabstandete und in Ausgangshalbzeugbahn-Hauptrichtung verlaufende Randkanten aufweist, wobei sich die Verteilung der Fasern in der Ausgangshalbzeugbahn über die ganze Breite erstreckt;
b) Abtrennen von parallelogrammförmigen Segmenten der Ausgangshalbzeugbahn, wobei die Segmente neben den zwei gegenüberliegenden, parallelen Randkanten zwei gegenüberliegende, parallele Schnittkanten aufweisen, wobei eine Schnittkante mit der Senkrechten der Randkante im Segment einen vorbestimmten Winkel aufweist, dessen Betrag β im Bereich von 0° bis kleiner 90° liegt, wobei gilt: α + β = 90°;
c) Positionierung von einem oder mehreren der Segmente an der zu verlängernden Halbzeugbahn, so daß die Randkanten der Segmente parallel liegen und benachbarte Segmente an den Randkanten überlappen, wobei die Überlappung 0,1 bis 8 mm, bevorzugt 0,1 bis 6 mm, besonders bevorzugt 1,0 mm bis 3 mm beträgt, wobei ferner die Schnittkanten entlang der Bahn-Hauptrichtung der Halbzeugbahn liegen und die Randkanten der neuen Halbzeugbahn bilden und wobei die unidirektional ausgerichteten Endlosfasern der Segmente einen vorbestimmten Winkel mit der Bahn-Hauptrichtung einschließen, dessen Betrag α ist;
d) Verbinden der benachbarten Segmente durch Ultraschallschweißen unter Bildung einer Schweißnaht, wobei die Schweißnaht den Bereich der Überlappung der Segmente im wesentlichen vollständig umfaßt.

Mit dem erfindungsgemäßen Verfahren können die erfindungsgemäßen Halbzeugbahnen vorteilhaft und ökonomisch hergestellt werden.

Das erfindungsgemäße Verfahren kommt ohne Schweißfaden und ohne zusätzlich als Schweißhilfe eingelegte Folien oder Tapes aus. Dies vereinfacht das Verfahren beträchtlich, vermeidet zeitintensive Fadenführung bzw. Folienplazierung und gewährleistet ein Höchstmaß an Materialuniformität und Berechenbarkeit der anisotropen Eigenschaften der erfindungsgemäßen X°-Tape-Halbzeugbahn.

Die Überlappung in Verfahrensschritt c), gemessen in Laufrichtung des entstehenden erfindungsgemäßen Halbzeugs entspricht bevorzugt der Breite der Schweißnaht, kann jedoch auch geringer sein.

Die Schnittkanten der Segmente sind dabei im allgemeinen im wesentlichen rechteckig und im wesentlichen eben und im wesentlichen senkrecht zur Hauptfläche der Bahn bzw. der Segmente.

Durch die überlappende Positionierung wird zunächst eine deutlich einfachere und schnellere Positionierbarkeit erzielt, was allein bereits einen Vorteil gegenüber der Ablage "auf Stoß" darstellt. Zudem wird der Prozeß sicherer, d.h. es kommt zu weniger Fehlpositionierungen, und Fehlstellen werden vermieden. Ultraschallschweißen, bevorzugt unter Anwendung von Druck sorgt für ein beschleunigtes Verfahren. Die für die Erweichung des Thermoplasten benötigte Wärme entsteht unmittelbar und vollständig an Ort und Stelle in der Schweißnaht und muß nicht erst von außen nach innen dringen. Die Erfinder haben zudem festgestellt, daß die Verbindungsfestigkeit zwischen den Segmenten im Bereich der Schweißnaht beim erfindungsgemäßen Verfahren, d.h. bei einer erhöhten Faserdichte bzw. einem erhöhten Fasergewichtsanteil im Bereich der Schweißnaht erhöht ist. Dies steht im Widerspruch zu Vorurteilen aus dem Stand der Technik, die grundsätzlich von einer Schwächung der Bindung bei erhöhtem Fasergehalt im Bereich einer (konventionellen) Schweißnaht ausgehen. Möglicherweise - ohne auf die Theorie festgelegt werden zu wollen - ist dies auf eine Verzwirbelung oder ein Ineinanderrütteln der Fasern beim Ultraschallschweißvorgang zurückzuführen.

Besonders bevorzugt ist erfindungsgemäß, wenn die in der Matrix aus thermoplastischem Kunststoff eingebetteten Endlosfasern vollständig oder nahezu vollständig von thermoplastischem Kunststoff umhüllt sind. Insbesondere ist bevorzugt, daß die Ausgangshalbzeugbahn keinen Randbereich mit verringerter Faserdichte aufweist.

Der Fachmann wird erkennen, daß das erfindungsgemäße Verfahren kontinuierlich und diskontinuierlich durchgeführt werden kann. Beispielsweise können die Segmente in einem gesonderten Verfahrensschritt und auch zeitlich und/oder räumlich getrennt vom übrigen Verfahren aus der Ausgangshalbzeugbahn (Ausgangswickellage, 0°-UD-Tape) geschnitten und aufbewahrt werden, bspw. in gestapelter Form, bevor sie dann bspw. durch eine Positioniereinrichtung erfindungsgemäß überlappend positioniert und verschweißt werden. Dies kann beispielsweise so geschehen, daß der Stapel als ganzer in Position gedreht wird (z.B. um 90°) und die einzelnen Segmente dann ohne weitere Drehung von dem gedrehten Stapel mit üblichen Positionierungsund Transportvorrichtungen (bspw. durch eine Transportspinne) abgenommen werden. Von besonderem Interesse und mit besonderen Vorteilen verbunden ist jedoch eine (semi)kontinuierliche Ausführung der Erfindung, bei der fortwährend von einer Ausgangshalbzeugbahn (Ausgangswickellage, einem 0°-Band) einzelne (oder auch mehrere) Segmente in definiertem Winkel abgeschnitten werden, gedreht und positioniert sowie verschweißt werden, so daß die Herstellungsvorrichtung an der Produktseite eine X°-Tape-Endloswickellage verläßt, die aufgewickelt wird in dem gleichen Maße, wie auf der Ausgangsseite eine 0°-UD-Tape-Ausgangswickellage abgewickelt und hineingeführt wird.

In herkömmlichen Verfahren übernehmen in sogenannten Crossply-Anlagen ("Pick and Place") Roboter das Herausschneiden einzelner Segmente einer Ausgangshalbzeugbahn und bspw. nach Drehung um 90° das Ablegen der Segmente auf einer Bahn auf Stoß mit den zuvor abgelegten Segmenten. Ein solches Einzelverfahren ist derart aufwendig, daß es lediglich etwa 2 m/Minute Bahnfortschritt erzielen kann. Mit dem erfindungsgemäßen Verfahren können typischerweise bis zu 12 m/Minute Bahnfortschritt erzielt werden. Es entsteht erfindungsgemäß zudem weniger Abfall und Ausschuß.

Wie anhand der Abstände von Schweißnaht zu Schweißnaht in Bahn-Hauptrichtung der Halbzeugbahn, gemessen von Beginn der Schweißnaht bis zum Beginn der darauffolgenden Schweißnaht weiter oben bereits beschrieben können die Segmente der Ausgangshalbzeugbahn bevorzugt eine Schnittkante mit einer Länge von 30 bis 150 cm, insbesondere 60 bis 130 cm bevorzugt 115 bis 128 cm aufweisen. Im Falle der Herstellung eines 90°-Tapes entspricht die (Länge der) Schnittkante - quer zur Laufrichtung der Ausgangshalbzeugbahn - der Breite der Ausgangshalbzeugbahn.

Durch den erfindungsgemäß notwendigen Verfahrensschritt c), d.h. der überlappenden Positionierung der Segmente wird grundsätzlich eine Verdickung der Halbzeugbahnen im Bereich der Schweißnähte in Kauf genommen. Dies ist jedoch kein Nachteil, da sich die Verdickungen im weiteren Verfahren nicht negativ bemerkbar machen. Erfindungsgemäß kann sich jedoch auch bevorzugt ein Schritt e) anschließen: Druckbehandlung ("Verplättung" oder Glättung) der Schweißnähte, so daß die Dicke des Bahnkörpers im Bereich der Schweißnähte im Bereich des 1,0- bis 1,5-fachen, 1,1- bis 1,5-fachen oder 1,2- bis 1,4-fachen der sonstigen arithmetisch gemittelten Dicke des Bahnkörpers liegt. Hier sind auch andere Dickenverhältnisse im Sinne der Erfindung vorteilhaft einstellbar. Beispielsweise kann die Dicke so eingestellt werden, daß überhaupt keine Verdickung im Bereich der Schweißnähte mehr auftritt, die Dicke des Bahnkörpers im Bereich der Schweißnähte also der sonstigen Dicke des Bahnkörpers entspricht. Wie bereits ausgeführt ist dies beim herkömmlichen Verfahren mit Positionierung der Segmente "auf Stoß" nicht ohne weiteres erzielbar, und die Dicke ist im Bereich der Schweißnähte reduziert. Eine Verdickung im Bereich der Schweißnähte wie sie erfindungsgemäß auftreten kann, ist im allgemeinen unschädlich.

Eine weitere Ausführungsform des erfindungsgemäßen Verfahrens zeichnet sich dadurch aus, daß in den Schritten c) und d) jeweils ein einzelnes Segment mit der zu verlängernden Halbzeugbahn überlappend positioniert wird und sodann ultraschallverschweißt wird, bevor sich der Vorgang nach Weitertransport am neuen Ende der verlängerten Halbzeugbahn durch überlappende Positionierung eines weiteren Segments wiederholt.

Bevorzugt umfaßt das erfindungsgemäße Verfahren einen zusätzlichen Schritt f): Aufwickeln der Halbzeugbahn. Nach dem beschriebenen Verfahren kann eine erfindungsgemäße Endloswickellage erhalten werden. Wenn das Verfahren wie beschrieben einen Schritt f) des Aufwickelns der Halbzeugbahn enthält, kann eine erfindungsgemäße Endloswickellage auf Rolle erhalten werden, die ohne weitere Modifizierungen kommerzialisiert werden kann und ihren Verwendungen zugeführt werden kann, in denen sich die Vorteile der Verfügbarkeit von kostengünstig und schnell hergestellten X°-Tapes als Endloswickellagen mit praktisch jedem gewünschten Winkelbetrag X nutzen lassen.

Die erfindungsgemäße Halbzeugbahn bzw. die erfindungsgemäße Endloswickellage kann demnach erfindungsgemäß beispielsweise zur Herstellung eines Mehrschichtverbundwerkstoffs verwendet werden, insbesondere eines Mehrschichtverbundwerkstoffs, der mindestens zwei Schichten mit voneinander unterschiedlichen Faserausrichtungen umfaßt. Ein solcher Mehrschichtverbundwerkstoff wird auch als Organoblech bezeichnet oder verwendet.

Die Erfindung betrifft daher auch einen Mehrschichtverbundwerkstoff, beispielsweise ein Organoblech, umfassend mindestens eine, vorzugsweise mindestens zwei Schichten, die je aus einer erfindungsgemäßen Halbzeugbahn bzw. einer erfindungsgemäßen Endloswickellage bestehen, wobei bevorzugt mindestens zwei Schichten mit voneinander unterschiedlichen Faserausrichtungen umfaßt sind. Ein solcher erfindungsgemäßer Mehrschichtverbundwerkstoff kann ein Standard-Organoblech sein, beispielsweise mit einer Schichtenfolge von X°-Tapes der folgenden Ausrichtungen: 0°, 90°, 0°, 0°, 0°, 0°, 0°, 0°, 90°, 0°. Wie der Fachmann erkennen wird, können nach den gestellten Anforderungen erfindungsgemäß unterschiedliche bis beliebige Kombinationen und Variationen hergestellt werden.

Ein erfindungsgemäßes Organoblech im weiteren Sinne kann auch ein erfindungsgemäßer Mehrschichtverbundwerkstoff sein, der eine oder mehrere nicht-polymere Schichten, beispielsweise metallische wie Aluminium-, Kupfer- und/oder Stahlschichten umfasst. Auch in solchen Verbünden lässt sich die vorliegende Erfindung vorteilhaft einsetzen. Beispielsweise weist ein Organoblech enthaltend mehrere (d.h. beispielsweise 3 bis 12 metallfreie Schichten aus 0°-Bändern und mindestens einem X°-Tape gemäß der vorliegenden Erfindung) und eine (beispielsweise als mittlere Schicht, innere oder äußere Schicht eingesetzte) Schicht aus metallischem Aluminium (beispielsweise als Aluminiumfolie) und dadurch eine besondere Dichtigkeit, elektrische Abschirmung und/oder einen besonderen Flammschutz auf, die solche Bleche zu idealen Halbzeugen/Verbundwerkstoffen für die Herstellung von Stromspeicherzellen bzw. für den Bau von Automobilen mit Elektroantrieb machen. Erfindungsgemäße Organobleche enthaltend eine Schicht aus Aluminiumfolie sind ohne zusätzlichen apparativen Aufwand in denselben Werkzeugen in gleicher Weise weiterverarbeitbar und dreidimensional verformbar wie metallfreie erfindungsgemäße Organobleche. Statt einer Folie können auch metallische Schichten aus metallischen Fasern, kunststoffmatrixgebundenen Metallfasern, Fasergelegen, Fasergeweben, oder andere flächige metallische Gebilde wie beispielsweise Netze und Gitter Verwendung finden. Hierbei unterliegt die metallische Schicht in ihren Dickeausmaßen grundsätzlich denselben Beschränkungen wie die übrigen Schichten (üblicherweise sind die Schichtdicken im Bereich 0,01 mm bis 0,40 mm). Insbesondere für Karosserie- und Verkleidungsteile im Bereich der Batterie- und Hochvolt-Bauteile sind die erfindungsgemäßen metallschichthaltigen Organobleche von großem Nutzen. Je nach Anwendungszweck können die erfindungsgemäßen Vorteile mit metallhaltigen oder metallfreien Organoblechen erzielt werden.

### Beispiel:

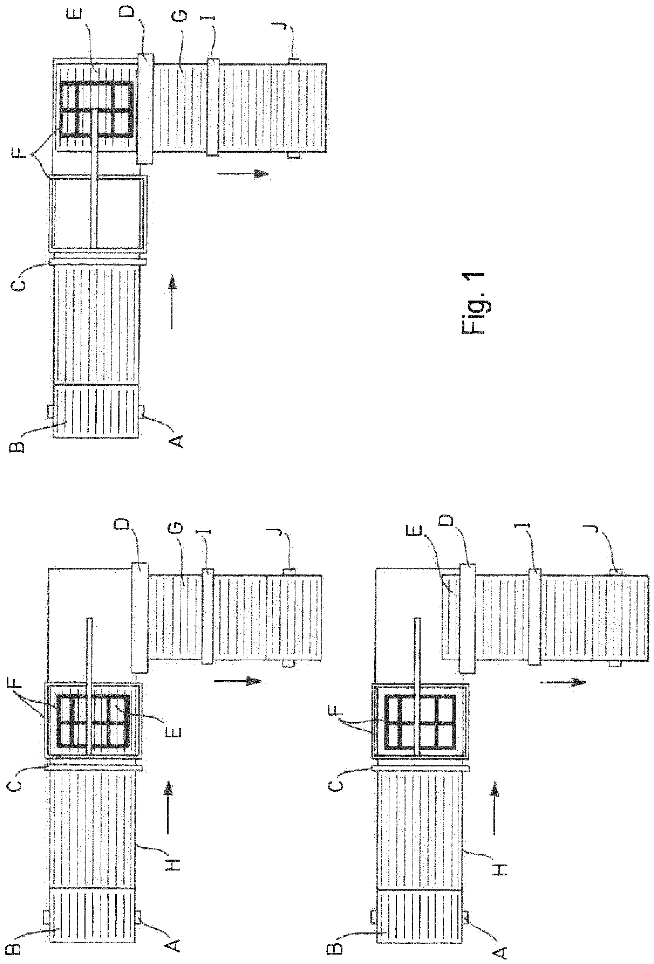

Das erfindungsgemäße Verfahren kann beispielsweise auf einer Vorrichtung wie in Fig. 1 dargestellt ausgeführt werden. Hier bezeichnet (A) eine Abwickeleinrichtung, bspw. eine Rolle, von der ein 0°-UD-Tape als Ausgangshalbzeugbahn (B) in Form einer Endloswickellage abgespult und der Schneidvorrichtung (C) zugeführt werden kann. Die Schneidvorrichtung (C) kann dabei jede beliebige Art der Schneidvorrichtung sein, beispielsweise ein Rollmesser, ein Quetschmesser, eine Schlagschere, eine Tafelschere, eine Guillotine, ein Fallmesser, eine Hebelschere, ein Laserschneidegerät, eine Wasserstrahlschneideinrichtung, eine Fräse, eine Kappsäge, eine Bandsäge, eine Trennscheibe oder jede andere geeignete Vorrichtung. Vorzugsweise können mit der Schneidvorrichtung (C) beliebige Winkel von -90° bis +90° (ausgenommen 0°) zur Laufrichtung der Ausgangshalbzeugbahn eingestellt und geschnitten werden, d.h. im Sinne der vorliegenden Erfindung einen Winkelbetrag von größer als 0° bis (einschließlich) 90°.

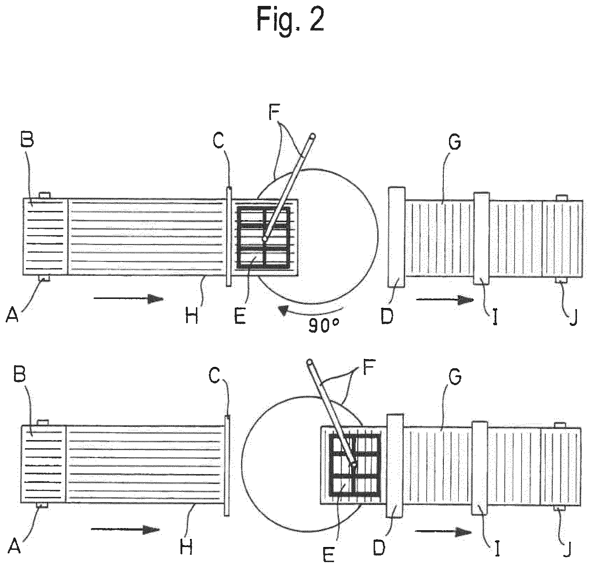

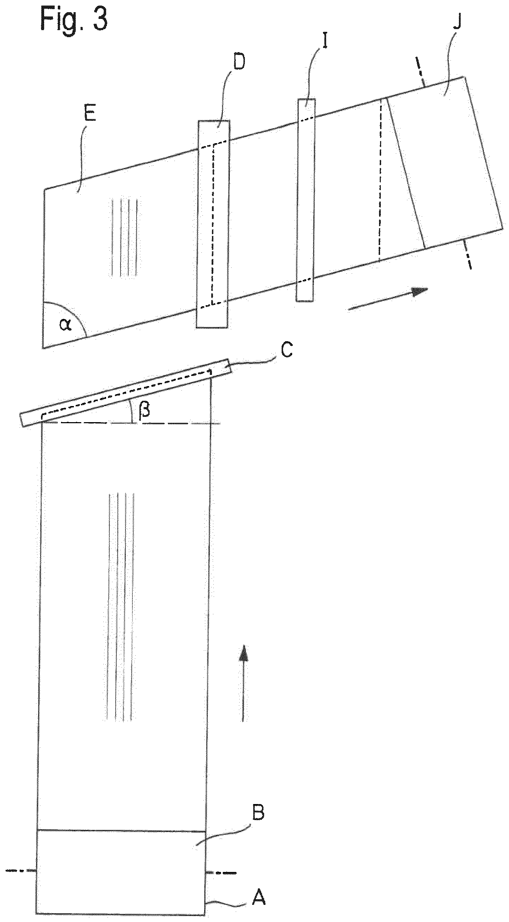

Der Vorschub der Ausgangshalbzeugbahn (B) stoppt bevorzugt für die Dauer des Schneidvorgangs. Nach dem Abtrennen kann das Segment (E) von einer Positioniervorrichtung (F) übernommen werden und entweder zwischengelagert (beispielsweise in Form eines Stapels von Segmenten) oder unmittelbar an das Ende des wachsenden erfindungsgemäßen X°-Bandes (G) transportiert und überlappend positioniert werden. Hierbei sind verschiedene Positioniervorrichtungen (F) und Geometrien möglich, die dem Fachmann im Prinzip bekannt sind. Beispielsweise kann der Schneidwinkel wie in Figur 1 durch eine abgewinkelte Zufiihrungseinrichtung (H) in eine gerade Ausrichtung des X°-Bandes übertragen werden, oder eine spezielle Ausgestaltung der Positioniervorrichtung sorgt für eine Übernahme, Drehung und Ausrichtung der Segmente, so daß auch bspw. eine lineare Gesamtausrichtung der Vorrichtung ermöglicht wird (Fig. 2). Die Positioniervorrichtung (F) kann dabei beispielsweise ein Robotergreifarm, eine Robotergreifhand, ein Drehteller, eine drehbare Saugeinrichtung oder eine andere geeignete, im Prinzip bekannte Vorrichtung sein. Fig. 3 veranschaulicht die Herstellung eines X°-UD-Bandes, in dem die Fasern mit der Laufrichtung des X°-Bandes einen Winkelbetrag α einschlie-ßen, durch Abtrennen von parallelogrammförmigen Segmenten der Ausgangshalbzeugbahn, wobei eine Schnittkante mit der Senkrechten der Randkante im Segment einen vorbestimmten Winkelbetrag β aufweist, gemäß Schritt b) des erfindungsgemäßen Verfahrens. Die grundsätzlich variable Positioniervorrichtung (F) wird in Fig. 3 nicht dargestellt.

Der Überlappungsgrad der Segmente ist mittels Servomotoren während des Betriebs stufenlos einstellbar. Die Positionierung und die Überlappung kann beispielsweise mittels optischer Messsysteme ermittelt und entsprechend automatisiert oder manuell verstellt werden.

Erfindungsgemäß erfolgt die Verbindung der überlappend positionierten Segmente mittels Ultraschallschweißtechnik. Die Ultraschallschweißtechnik ist dem Fachmann im Prinzip bekannt. Beim Ultraschallschweißen, einem Reibschweißverfahren, wird die Erweichung des thermoplastischen Materials durch hochfrequente mechanische Schwingungen zwischen 15 und 70 kHz meist 20 bis 35 kHz erzielt, die über Molekular- und Grenzflächenreibung zur Erwärmung direkt im Schweißbereich führt. Apparative Details der Ultraschweißtechnik können bspw. der WO 2017/220327 A1 entnommen werden. Während bei einem konventionellen Thermoschweißen 10-12 Schweißtakte pro Minute erzielt werden, sind dies beim Ultraschallschweißen ein Vielfaches, beispielsweise etwa 45 Schweißtakte pro Minute.

In einer besonderen Ausgestaltung der Erfindung können auch mehrere Segmente gleichzeitig oder nahezu gleichzeitig aus der Ausgangshalbzeugbahn herausgeschnitten werden sowie mehrere Segmente gleichzeitig oder nahezu gleichzeitig hintereinander und überlappend zusammengefügt werden zum Verschweißen, das wiederum gleichzeitig oder nahezu gleichzeitig erfolgen kann. Hierzu ist es beispielsweise möglich, mehrere Ausgangshalbzeugbahnen an die Schweißeinrichtung heranzuführen oder mehrere Positioniervorrichtungen (F) vorzusehen.

Nach dem Schweißvorgang durch die Ultraschallschweißvorrichtung (D), der 0,2 bis 0,4 Sekunden dauern kann, kann sich eine Glättung mittels Werkzeug (I) anschließen, beispielsweise durch Druckbehandlung ("Verplättung"). Danach wird das verlängerte erfindungsgemäße Halbzeug um die Länge bevorzugt eines Segments oder so vieler Segmente wie im selben Schritt angefügt wurden, weiterbewegt. Die X°-UD-Tape Endloswickellage kann dann kontinuierlich beispielsweise auf eine Rolle (1) oder einen Wickelkern aufgewickelt werden. Dies kann gerade, oder spiralförmig erfolgen.

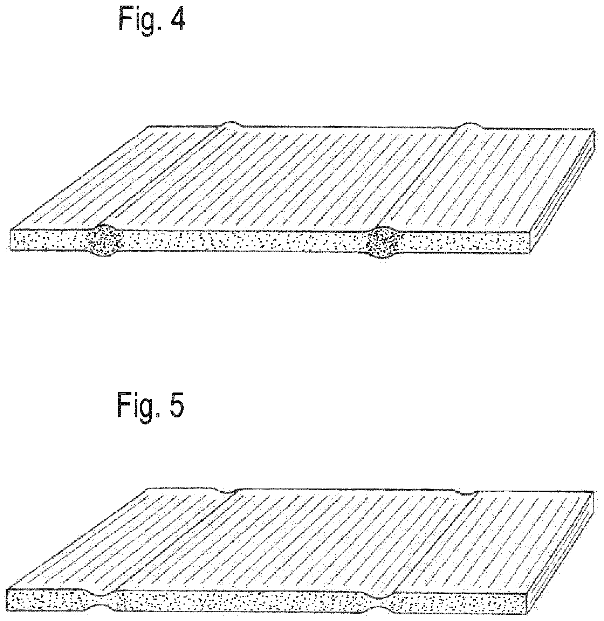

Fig. 4 zeigt ein erfindungsgemäßes 90°-Tape. Fig. 5 zeigt ein herkömmliches 90°-Tape, hergestellt durch Stoßverbindung.

Fig. 6 zeigt eine mikroskopische Aufnahme (200-fache Vergrößerung) des Querschnitts eines erfindungsgemäßen 90°-Tapes im Bereich der Schweißnaht. Gut zu erkennen ist die zickzackförmige Oberfläche, die durch die entsprechend geformte Sonotrode beim Ultraschallschwei-ßen entstanden ist. Ebenso gut zu erkennen sind die zwei überlappenden Faserlagen.

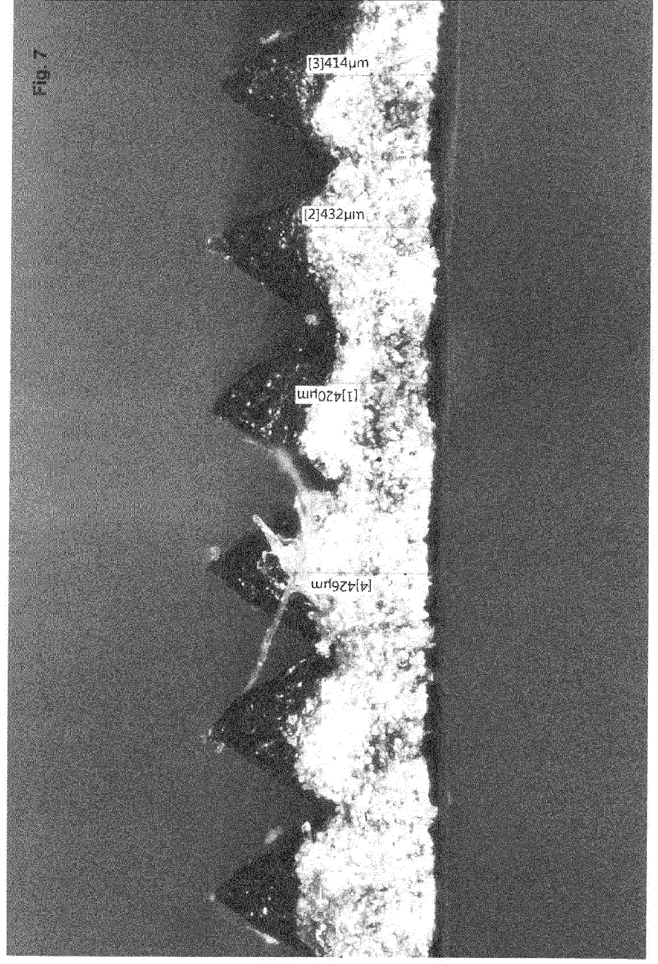

Fig. 7 zeigt eine weitere mikroskopische Aufnahme (200-fache Vergrößerung) des Querschnitts eines erfindungsgemäßen 90°-Tapes im Bereich der Schweißnaht mit Dickemessungen.

### Beispiel 1

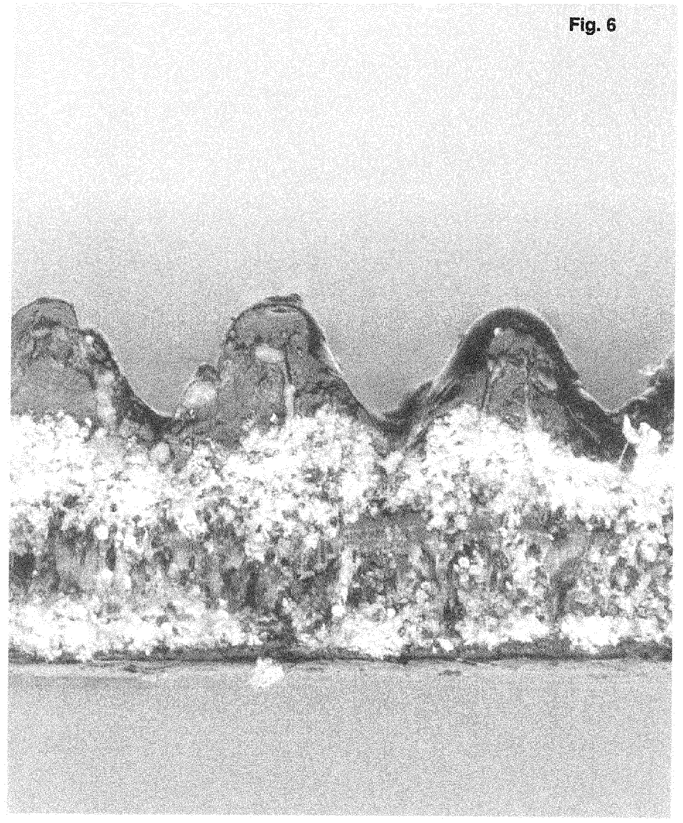

Es wurde nach dem erfindungsgemäßen Verfahren aus einem 0°-UD-Band mit der folgenden Charakteristik (240 mm Breite, 0,23 mm Dicke, Matrixmaterial Thermoplast Polypropylen, 47 Volumen-% Fasergehalt, 72 Gew.-% Fasergewichtsanteil über die gesamte Breite der Ausgangshalbzeugbahn (des 0°-UD-Bands), 17 µm Faserdurchmesser, Glasfaser) mit einer Überlappung von 2 mm ein 24,0 cm breites 90°-UD-Band hergestellt. (Dicke im Bereich der Schweißnaht zwischen 350 und 590 µm; Schweißdruck bei Ultraschallschweißen P=2,6 x4 PG=1,5 10910N; - Schweißzeit: Sz=0,25s; Werte arithmetisch gemittelt über 2 Proben). Fig. 6 zeigt einen Querschnitt aus dem Bereich der Schweißnaht. Gut zu erkennen ist die durch die gezackte Sonotrode bedingte gezackte Oberfläche sowie der erhöhte Faserpräsenz im Bereich der Schweißnaht.

### Vergleichsbeispiel 2

Beispiel 1 wurde wiederholt mit dem Unterschied, dass die Segmente der Ausgangshalbzeugbahn auf Stoß positioniert wurden und daraufhin unter denselben Bedingungen ultraschallverschweißt wurden.

### Beispiel 3

Beispiel 1 wurde wiederholt mit dem Unterschied, daß anstelle von Ultraschallschweißen in der Wärmepresse thermisch geschweißt wurde (Schweißtemperatur 160 °C, Schweißdruck P=7,0 bar, Schweißzeit Sz=1.0 s; Werte arithmetisch gemittelt über 4 Proben).

Aus den hergestellten Halbzeugbahnen wurden (quer zur Laufrichtung) 15 mm breite und in Laufrichtung 24 cm lange Streifen herausgeschnitten, die jeweils eine vollständige Breite einer Schweißnaht umfassten. Die Zugeigenschaften in Laufrichtung wurden nach DIN EN ISO 527-1 bestimmt (Vorkraft 0,2 N; Prüfgeschwindigkeit: 100 mm/min; Einspannlänge bei Startposition: 50,00 mm) und über mehrere Messungen arithmetisch gemittelt. Die Ergebnisse sind in der folgenden Tabelle I zusammengefasst:

**Tabelle 1**

| | max. Kraft [N] | Bruchkraft [N] | Bruchdehnung % |
|---|---|---|---|
| Beispiel 1 | 46,7 | 18,7 | 8,6 |
| Vergleichsbeispiel 2 | 10,2 | 10,2 | 0,6 |
| Beispiel 3 | 10,8 | 10,8 | 0,8 |

Ein Vergleich der Zugfestigkeit in Laufrichtung, d.h. quer zu den Verstärkungsfasern, zeigt zunächst, dass in den Beispielen, die durch Überlappung der Segmente erhalten wurden, eine geringere Bruchneigung des 90°-UD-Tapes in Laufrichtung besteht als beim Vergleichsbeispiel 2. Vergleichsbeispiel 2 unterscheidet sich vom erfindungsgemäßen 90°-UD-Tape 1 lediglich dadurch, dass es durch Ultraschallschweißen der "auf Stoß" abgelegten Segmente erhalten wurde, d.h. ohne Überlappung. Auch konventionelle thermische Verschweißung in Beispiel 3 führt zu einer leichten Erhöhung der Zugfestigkeit, wenn die Segmente überlappen, was für sich bereits überraschend ist. Das 90°-UD-Tape, in dem die Faserverstärkungen überlappen, reißt praktisch nie an den Schweißnähten, sondern stets in den Zwischenbereichen. Besonders auffallend ist jedoch der überraschende Befund, dass das erfindungsgemäß überlappende und durch Ultraschallschweißen erhaltene 90°-UD-Tape eine beträchtlich erhöhte Zugfestigkeit aufweist. Die vorliegende Erfindung zeigt somit, dass durch die überlappende Schweißnaht somit kein Element verminderter Zugfestigkeit eingeführt, sondern im Gegenteil die Zugfestigkeit erhöht wird. Ein besonderer Effekt überraschend gesteigerter Zugfestigkeit tritt auf, wenn zur erfindungsgemäßen Überlappung der Segmente synergistisch hinzutritt, dass die Segmente durch Ultraschallschweißen verbunden werden.

## Patentansprüche

1. Mit unidirektional ausgerichteten Endlosfasern verstärkte einlagige Halbzeugbahn mit einer Laufrichtung, die eine Matrix enthaltend mindestens 60 Gew.-% aus einem oder mehreren thermoplastischen Polymeren ausgewählt aus der Gruppe bestehend aus Polyamid, Polyolefin und Gemischen davon aufweist und in periodisch auftretenden Abständen Schweißnähte überlappender faserverstärkter Halbzeugbahnsegmente aufweist, wobei die Faserlagen der faserverstärkten Halbzeugbahnsegmente überlappen, wobei die Dicke der Halbzeugbahn im Bereich der Schweißnähte mindestens genauso hoch ist wie im arithmetischen Mittel der übrigen Bereiche der Halbzeugbahn und wobei in Laufrichtung die Breite der Bereiche der Schweißnähte 0,1 bis 8 mm beträgt und wobei die Dicke der Halbzeugbahn in den Bereichen außerhalb der Bereiche der Schweißnähte 0,01 mm bis 0,40 mm beträgt und wobei die unidirektional ausgerichteten Endlosfasern einen vorbestimmten Winkel mit der Laufrichtung einschließen, dessen Betrag α im Bereich von größer 0° bis 90° liegt.

2. Halbzeugbahn gemäß Anspruch 1, **dadurch gekennzeichnet, daß**
i) im Bereich der Schweißnähte der Fasergewichtsanteil mindestens 1,2 mal so hoch ist wie in den übrigen Bereichen der Halbzeug-Bahn; und/oder
ii) die Dicke der Halbzeug-Bahn im Bereich der Schweißnähte mindestens 1,2 mal so hoch, aber nicht höher als 4,0 mal so hoch ist wie im arithmetischen Mittel der übrigen Bereiche der Halbzeugbahn; und/oder
iii) das Fasergewicht pro Längeneinheit in Laufrichtung, arithmetisch gemittelt über alle Schweißnähte einer Halbzeugbahn, im Bereich der Schweißnähte 1,4 bis 2,0, bevorzugt 1,8 bis 2,0 mal so hoch ist wie im arithmetischen Mittel der übrigen Bereiche der Halbzeugbahn; und/oder
iv) in Laufrichtung der Halbzeug-Bahn die Breite der Bereiche der Schweißnähte 0,1 bis 6 mm, bevorzugt 1,0 mm bis 3 mm betragen.

3. Halbzeugbahn gemäß Anspruch 1 oder 2, **dadurch gekennzeichnet, dass** die Schweißnähte durch Ultraschallschweißen erzeugt wurden.

4. Halbzeugbahn gemäß einem der Ansprüche 1 bis 3, **dadurch gekennzeichnet, daß** die Fasern Glasfasern, Polymerfaser, Carbonfasern, mineralische Fasern, anorganische Synthesefasern umfassen, bevorzugt Glasfasern umfassen.

5. Halbzeugbahn gemäß einem der Ansprüche 1 bis 4, **dadurch gekennzeichnet, daß** die Dicke der Halbzeugbahn in den Bereichen außerhalb der Bereiche der Schweißnähte 0,15 bis 0,25 mm, bevorzugt 0,18 bis 0,23 mm beträgt.

6. Halbzeugbahn gemäß einem der Ansprüche 1 bis 5, **dadurch gekennzeichnet, daß** das das eine oder die mehreren thermoplastischen Polymer(e) der Matrix aus thermoplastischem Polyamid, Polypropylen, Polyethylen, oder Gemischen davon besteht/bestehen.

7. Endloswickellage bestehend aus einem oder mehreren aufgewickelten Halbzeugbahnen gemäß einem der Ansprüche 1 bis 6.

8. Verfahren zur Herstellung einer mit unidirektional ausgerichteten Endlosfasern verstärkten einlagigen Halbzeugbahn, umfassend die Schritte:
a) Zuführen einer mit unidirektional in Ausgangshalbzeugbahn-Laufrichtung ausgerichteten Endlosfasern verstärkten einlagigen Ausgangshalbzeugbahn (B), in der die unidirektional ausgerichteten Endlosfasern in einer Matrix enthaltend mindestens 60 Gew.-% aus einem oder mehreren thermoplastischen Polymeren ausgewählt aus der Gruppe bestehend aus Polyamid, Polyolefin und Gemischen davon eingebettet sind und die zwei gegenüberliegende, parallele durch die Breite der Ausgangshalbzeugbahn (B) beabstandete und in Ausgangshalbzeugbahn-Laufrichtung verlaufende Randkanten aufweist, wobei sich die Verteilung der Fasern in der Ausgangshalbzeugbahn (B) über die ganze Breite erstreckt;
b) Abtrennen von parallelogrammförmigen Segmenten (E) der Ausgangshalbzeugbahn (B), wobei die Segmente (E) neben den zwei gegenüberliegenden, parallelen Randkanten zwei gegenüberliegende, parallele Schnittkanten aufweisen, wobei eine Schnittkante mit der Senkrechten der Randkante im Segment (E) einen vorbestimmten Winkel aufweist, dessen Betrag β im Bereich von 0° bis kleiner 90° liegt, wobei gilt: α + β = 90°;
c) Positionierung von einem oder mehreren der Segmente (E) an der zu verlängernden Halbzeugbahn, so daß die Randkanten der Segmente parallel liegen und benachbarte Segmente (E) an den Randkanten überlappen, wobei die Überlappung 0,1 bis 8 mm beträgt, wobei ferner die Schnittkanten entlang der Laufrichtung der Halbzeugbahn liegen und die Randkanten der neuen Halbzeugbahn bilden und wobei die unidirektional ausgerichteten Endlosfasern der Segmente einen vorbestimmten Winkel mit der Laufrichtung einschließen, dessen Betrag α ist;
d) Verbinden der benachbarten Segmente (E) durch Ultraschallschweißen unter Bildung einer Schweißnaht, wobei die Schweißnaht den Bereich der Überlappung der Segmente (E) im wesentlichen umfaßt.

9. Verfahren gemäß Anspruch 8 zur Herstellung einer mit unidirektional ausgerichteten Endlosfasern verstärkten einlagigen Halbzeugbahn mit einer Laufrichtung nach einem der Ansprüche 1 bis 6.

10. Verfahren gemäß Anspruch 8 oder 9, **dadurch gekennzeichnet, daß** sich ein Schritt e) anschließt: Druckbehandlung der Schweißnaht, so daß die Dicke des Bahnkörpers im Bereich der Schweißnaht im Bereich des 1,0- bis 1,5-fachen der sonstigen arithmetisch gemittelten Dicke des Bahnkörpers liegt.

11. Verfahren gemäß einem der Ansprüche 8 bis 10, **dadurch gekennzeichnet, daß** in den Schritten c) und d) jeweils ein einzelnes Segment (E) mit der zu verlängernden Halbzeugbahn überlappend positioniert wird und sodann ultraschallverschweißt wird, bevor sich der Vorgang nach Weitertransport am neuen Ende der verlängerten Halbzeugbahn durch überlappende Positionierung eines weiteren Segments (E) wiederholt.

12. Verfahren nach einem der Ansprüche 8 bis 11, umfassend den zusätzlichen Schritt f): Aufwickeln der Halbzeugbahn.

13. Verwendung einer Halbzeugbahn gemäß einem der Ansprüche 1 bis 6 oder einer Endloswickellage gemäß Anspruch 7 zur Herstellung eines Mehrschichtverbundwerkstoffs, insbesondere eines Mehrschichtverbundwerkstoffs, der mindestens zwei Schichten mit voneinander unterschiedlichen Faserausrichtungen umfaßt.

14. Verwendung einer Halbzeugbahn gemäß einem der Ansprüche 1 bis 6 oder einer Endloswickellage gemäß Ansprüche 7 im Tape-verstärkten Spritzguß.

15. Mehrschichtverbundwerkstoff, umfassend mindestens eine, vorzugsweise mindestens zwei Schichten, die je aus einer Halbzeugbahn gemäß einem der Ansprüche 1 bis 6 oder einer Endloswickellage gemäß Anspruch 7 bestehen, wobei bevorzugt mindestens zwei Schichten mit voneinander unterschiedlichen Faserausrichtungen umfaßt sind.

16. Mehrschichtverbundwerkstoff gemäß Anspruch 15, umfassend eine oder mehrere Schichten aus Metall.

## Claims

1. A single-ply semi-finished product web which is reinforced with unidirectionally orientated continuous fibers and exhibits a movement direction and comprises a matrix containing at least 60% by weight of one or more thermoplastic polymers selected from the group consisting of polyamide, polyolefin and mixtures thereof and comprising welding seams of overlapping fiber-reinforced semi-finished product web segments at periodically occurring intervals, wherein the fiber plies of the fiber-reinforced semi-finished product web segments overlap, wherein the thickness of the semi-finished product web in the region of the welding seams is at least exactly as high as the arithmetic mean of the other regions of the semi-finished product web, and wherein the width of the regions of the welding seams is more than 0.1 mm to 8 mm in the movement direction, and wherein the thickness of the semi-finished product web in the regions outside the regions of the welding seams is 0.01 mm to 0.40 mm, and wherein the unidirectionally orientated continuous fibers enclose a predetermined angle with the movement direction, the value α of which is in the range of more than 0° to 90°.

2. The semi-finished product web according to claim 1, **characterized in that**
i) in the region of the welding seams, the proportional weight of fibers is at least 1.2 times as high as in the other regions of the semi-finished product web; and/or
ii) the thickness of the semi-finished product web in the region of the welding seams is at least 1.2 times as high, but not more than 4.0 times as high, as the arithmetic mean of the other regions of the semi-finished product web; and/or
iii) the weight of fibers per unit length in the movement direction, arithmetically averaged over all the welding seams of a semi-finished product web, in the region of the welding seams is 1.4 to 2.0 and preferably 1.8 to 2.0 times as high as the arithmetic mean of the other regions of the semi-finished product web; and/or
iv) in the movement direction of the semi-finished product web, the width of the regions of the welding seams are more than 0.1 mm to 6 mm, preferably more than 1.0 mm to 3 mm.

3. The semi-finished product web according to claim 1 or 2, **characterized in that** the welding seams have been manufactured by ultrasonic welding.

4. The semi-finished product web according to any one of claims 1 to 3, **characterized in that** the fibers comprise glass fibers, polymer fibers, carbon fibers, mineral fibers, inorganic synthetic fibers, preferably comprise glass fibers.

5. The semi-finished product web according to any one of claims 1 to 4, **characterized in that** the thickness of the semi-finished product web in the regions outside the regions of the welding seams is 0.15 to 0.25 mm, preferably 0.18 to 0.23 mm.

6. The semi-finished product web according to any one of claims 1 to 5, **characterized in that** the one or more thermoplastic polymer(s) of the matrix consist(s) of thermoplastic polyamide, polypropylene, polyethylene or mixtures thereof.

7. A continuous wound ply consisting of one or more wound semi-finished product webs according to any one of claims 1 to 6.

8. A method for manufacturing a single-ply semi-finished product web reinforced with unidirectionally orientated continuous fibers, comprising the steps of:
a) introducing a single-ply initial semi-finished product web (B) which is reinforced with continuous fibers orientated unidirectionally in the movement direction of the initial semi-finished product web (B) and in which the unidirectionally orientated continuous fibers are embedded in a matrix containing at least 60% by weight of one or more thermoplastic polymers selected from the group consisting of polyamide, polyolefin and mixtures thereof, and which exhibits two opposing, parallel peripheral edges spaced apart by the width of the initial semi-finished product web (B) and extending in the movement direction of the initial semi-finished product web (B), wherein the dispersal of the fibers in the initial semi-finished product web (B) extends over the entire width;
b) severing parallelogram-shaped segments (E) of the initial semi-finished product web (B), wherein the segments (E) exhibit two opposing, parallel cutting edges in addition to the two opposing, parallel peripheral edges, wherein one cutting edge exhibits a predetermined angle with respect to the perpendicular of the peripheral edge in the segment (E), the value β of which is in the range of 0° to less than 90°, where α + β = 90°;
c) positioning one or more of the segments (E) on the semi-finished product web to be lengthened, such that the peripheral edges of the segments are parallel and overlap adjacent segments (E) at the peripheral edges, wherein the overlap is more than 0.1 to 8 mm, wherein the cutting edges also lie along the movement direction of the semi-finished product web and form the peripheral edges of the new semi-finished product web, and wherein the unidirectionally orientated continuous fibers of the segments enclose a predetermined angle with the movement direction, the value of which is α;
d) connecting the adjacent segments (E) by ultrasonic welding, forming a welding seam, wherein the welding seam substantially encompasses the region of the overlap of the segments (E).

9. The method according to claim 8 for manufacturing a single-ply semi-finished product web which is reinforced with unidirectionally orientated continuous fibers and exhibits a movement direction according to any one of claims 1 to 6.

10. The method according to claim 8 or 9, **characterized in that** it is followed by a step e) of pressure-treating the welding seam, such that the thickness of the body of the web in the region of the welding seam is in the range of 1.0 to 1.5 times the other arithmetically averaged thickness of the body of the web.

11. The method according to any one of claims 8 to 10, **characterized in that** in each of steps c) and d), an individual segment (E) is positioned overlapping with the semi-finished product web to be lengthened and then ultrasonically welded, before the process is repeated at the new end of the lengthened semi-finished product web, after it has been transported further, by positioning another segment (E) overlapping.

12. The method according to any one of claims 8 to 11, comprising the additional step f) of winding the semi-finished product web.

13. The use of a semi-finished product web according to any one of claims 1 to 6 or a continuous wound ply according to claim 7 for manufacturing a multi-layer composite material, in particular a multi-layer composite material which comprises at least two layers having mutually differing fiber orientations.

14. The use of a semi-finished product web according to any one of claims 1 to 6 or a continuous wound ply according to claim 7 in tape-reinforced injection molding.

15. A multi-layer composite material, comprising at least one and preferably at least two layers, each consisting of a semi-finished product web according to any one of claims 1 to 6 or a continuous wound ply according to claims 7, and preferably comprising at least two layers having mutually differing fiber orientations.

16. The multi-layer composite material according to claim 15, comprising one or more layers made of metal.

## Revendications

1. Bande semi finie à une couche renforcée de fibres sans fin orientées unidirectionnellement pourvue d'un sens de défilement, qui présente une matrice contenant au moins 60 % en poids d'un ou de plusieurs polymères thermoplastiques choisis dans le groupe constitué de polyamide, de polyoléfine et de leurs mélanges et présente à des intervalles ayant lieu périodiquement des cordons de soudure de segments de bande semi finie renforcés de fibres se superposant, où les couches de fibres des segments de bande semi finie renforcée de fibres se superposent, où l'épaisseur de la bande semi finie dans la zone des cordons de soudure est au moins aussi importante que la moyenne arithmétique des autres zones de la bande semi finie et où, dans le sens de défilement, la largeur des zones des cordons de soudure est de 0,1 à 8 mm et où l'épaisseur de la bande semi finie dans les zones en-dehors des zones des cordons de soudure est de 0,01 mm à 0,40 mm et où les fibres sans fin orientées unidirectionnellement font un angle prédéterminé avec le sens de défilement dont la valeur α se situe dans la plage supérieure à 0 ° jusqu'à 90 °.

2. Bande semi finie selon la revendication 1, **caractérisée en ce que**
i) dans la zone des cordons de soudure, la proportion en poids de fibres est au moins 1,2 fois aussi importante que dans les autres zones de la bande semi finie ; et/ou
ii) l'épaisseur de la bande semi finie dans la zone des cordons de soudure est au moins 1,2 fois aussi importante, mais moins importante que 4,0 fois, que la moyenne arithmétique des autres zones de la bande semi finie ; et/ou
iii) le poids de fibres par unité de longueur dans le sens de défilement, moyenné arithmétiquement sur tous les cordons de soudure d'une bande semi finie est de 1,4 à 2,0 fois, de préférence 1,8 à 2,0 fois, aussi importante dans la zone des cordons de soudure que la moyenne arithmétique des autres zones de la bande semi finie ; et/ou
iv) dans le sens de défilement de la bande semi finie, la largeur des zones des cordons de soudure est de 0,1 à 6 mm, de préférence de 1,0 mm à 3 mm.

3. Bande semi finie selon la revendication 1 ou la revendication 2, **caractérisée en ce que** les cordons de soudure ont été créés par une soudure aux ultrasons.

4. Bande semi finie selon l'une des revendications 1 à 3, **caractérisée en ce que** les fibres comprennent des fibres de verre, des fibres de polymères, des fibres de carbone, des fibres minérales, des fibres de synthèse inorganiques, comprennent de préférence des fibres de verre.

5. Bande semi finie selon l'une des revendications 1 à 4, **caractérisée en ce que** l'épaisseur de la bande semi finie dans les zones en-dehors des zones des cordons de soudure est de 0,15 à 0,25 mm, de préférence 0,18 à 0,23 mm.

6. Bande semi finie selon l'une des revendications 1 à 5, **caractérisée en ce que** le ou les polymère(s) thermoplastique(s) de la matrice est/sont constitué/s de polyamide, polypropylène, polyéthylène thermoplastiques ou de mélanges de ceux-ci.

7. Couche d'enroulement sans fin constituée d'une ou de plusieurs bandes semi finies selon l'une des revendications 1 à 6 enroulées.

8. Procédé de fabrication d'une bande semi finie à une couche renforcée de fibres sans fin orientées unidirectionnellement comprenant les étapes :
a) de mise en place d'une bande semi finie de départ (B) à une couche renforcée de fibres sans fin orientées unidirectionnellement dans le sens de défilement de la bande semi finie de départ dans laquelle les fibres sans fin orientées unidirectionnellement sont incorporées dans une matrice contenant au moins 60 % en poids d'un ou de plusieurs polymères thermoplastiques choisis dans le groupe constitué de polyamide, de polyoléfine ou de leurs mélanges et qui présente deux arêtes de bordure opposées, parallèles et espacées par la largeur de la bande semi finie de départ (B) et s'étendant dans le sens de défilement de la bande semi finie de départ, où la distribution des fibres dans la bande semi finie de départ (B) s'étend sur toute la largeur ;
b) de séparation de segments (E) en forme de parallélogrammes de la bande semi finie de départ (B), où les segments (E) présentent, à coté des deux arêtes de bordure parallèles opposées, deux arêtes de coupe opposées parallèles, où une arête de coupe présente avec la verticale de l'arête de bordure dans le segment (E) un angle prédéterminé dont la valeur β se situe de 0 ° à inférieur à 90 °, où on a α + β = 90 ° ;
c) de positionnement d'un ou de plusieurs des segments (E) sur la bande semi finie à prolonger de sorte que les arêtes de bordure s'étendent parallèlement et des segments (E) voisins se superposent aux arêtes de bordure, où la superposition se situe de 0,1 à 8 mm, où, en outre, les arêtes de coupe se situent le long du sens de défilement de la bande semi finie et forment les arêtes de bordure de la nouvelle bande semi finie et où les fibres sans fin orientées unidirectionnellement des segments font un angle prédéterminé avec le sens de défilement dont la valeur est α ;
d) la liaison des segments (E) voisins par une soudure par ultrasons moyennant la formation d'un cordon de soudure, où le cordon de soudure comprend essentiellement la zone de la superposition des segments (E).

9. Procédé selon la revendication 8 pour la fabrication d'une bande semi finie à une couche renforcée de fibres sans fin orientées unidirectionnellement avec une direction de défilement selon l'une des revendications 1 à 6.

10. Procédé selon la revendication 8 ou la revendication 9, **caractérisé en ce qu'**une étape e) s'ajoute : le traitement sous pression du cordon de soudure de sorte que l'épaisseur du corps de bande dans la zone du cordon de soudure se situe dans la plage de 1,0 à 1,5 fois l'épaisseur du corps de bande moyennée arithmétiquement ailleurs.

11. Procédé selon l'une des revendications 8 à 10, **caractérisé en ce que**, dans les étapes c) et d), respectivement un seul segment (E) est positionné en superposition avec la bande semi finie rallongée et ainsi est soudée par ultrasons avant que le processus d'un transport ultérieur ne soit répété à la nouvelle extrémité de la bande semi finie prolongée par un positionnement en superposition d'un nouveau segment (E).

12. Procédé selon l'une des revendications 8 à 11, comprenant l'étape f) supplémentaire : l'enroulement de la bande semi finie.

13. Utilisation d'une bande semi finie selon l'une des revendications 1 à 6 ou d'une couche d'enroulement sans fin selon la revendication 7 pour la fabrication d'une matière composite en plusieurs couches, notamment une matière composite en plusieurs couches qui comprend au moins deux couches avec des orientations des fibres différentes les unes des autres.

14. Utilisation d'une bande semi finie selon l'une des revendications 1 à 6 ou d'une couche d'enroulement sans fin selon la revendication 7 dans le moulage par injection renforcé par un ruban.

15. Matière composite en plusieurs couches comprenant au moins une, de préférence au moins deux couches qui sont constituées soit à base d'une bande semi finie selon l'une des revendications 1 à 6 soit à base d'une couche d'enroulement sans fin selon la revendication 7, où, de préférence, au moins deux couches avec des orientations de fibres différentes les unes des autres sont comprises.

16. Matière composite en plusieurs couches selon la revendication 15, comprenant une ou plusieurs couches en métal.
